# EUROPEAN PATENT SPECIFICATION

(11) **EP 0 469 581 B1**
(45) Date of publication and mention of the grant of the patent: **13.10.1999**
(21) Application number: 91112882.5
(22) Date of filing: 31.07.1991
(51) Int. Cl.: G06F 15/02

(54) **Small electronic apparatus with program controlled exchangeable memory functions**
Kleines elektronisches Gerät mit programmgesteuerten Funktionen eines austauschbaren Speichers
Petit appareil électronique avec fonctions de mémoire interchangeable commandée par programme

(30) Priority: 31.07.1990 JP 20443190
(43) Date of publication of application: 05.02.1992
(73) Proprietor: SHARP KABUSHIKI KAISHA, Osaka-shi, Osaka-fu 545-0013 (JP)
(72) Inventor: Onishi, Hideki, Soraku-gun, Kyoto (JP); Yatsuzuka, Yasufumi, Kashihara-shi, Nara-ken (JP); Isoe, Toshio, Yamatokoriyama-shi, Nara-ken (JP); Takada, Yuji, Nara-shi, Nara-ken (JP); Matsuda, Eichika, Yamatotakada-shi, Nara-ken (JP); Takamura, Eiji, Nara-shi, Nara-ken (JP)
(74) Representative: Müller, Frithjof E., Dipl.-Ing.

(56) References cited:
- EP-A- 0 373 961
- US-A- 4 885 574
- PATENT ABSTRACTS OF JAPAN vol. 12, no. 401 (P-776)25 October 1988 & JP-A-63 142 410 ( SHARP CORP ) 14 June 1988
- PATENT ABSTRACTS OF JAPAN vol. 10, no. 119 (P-453)6 May 1986 & JP-A-60 246 469 ( SONY KK ) 6 December 1985
- PATENT ABSTRACTS OF JAPAN vol. 13, no. 172 (P-862)24 April 1989 & JP-A-1 007 158 ( SHARP CORP ) 11 January 1989
- PATENT ABSTRACTS OF JAPAN vol. 13, no. 516 (C-656)17 November 1989 & JP-A-1 209 081 ( NIPPON KOMUSHINKU ) 22 August 1989
- PATENT ABSTRACTS OF JAPAN vol. 14, no. 505 (C-0775)5 November 1990 & JP-A-2 209 173 ( MEITEC CORP ) 20 August 1990

## Description

### BACKGROUND OF THE INVENTION

### 1. Field of the Invention:

The present invention relates to a small electronic apparatus, and more particularly to a small electronic apparatus such as an electronic organizer which can be used in conjunction with an IC card inserted thereinto.

### 2. Description of the Prior Art:

In an electronic apparatus such as a personal computer, an application program to be executed is changed with another one in such a manner that an application program stored in an external storage medium such as a floppy disk is loaded into a storage section of the apparatus and then executed. Thus, the apparatus can execute the application which is not the inherent application of the apparatus. However, such a configuration has numerous disadvantages. For example, (1) it takes considerably long time to load an application program into the storage section of the apparatus, (2) it is necessary to prepare in the apparatus a storage section the capacity of which is sufficient to store the expected longest application program for the apparatus, and (3) since a device for loading an application program from the external storage medium (such as a floppy disk driver (FDD)) requires a large power, when the apparatus is powered by a battery, the available period of time is short.

Thus, for a hand-held small electronic apparatus such as a so-called electronic organizer, a thin case in the shape of a card containing a ROM which stores an application program (i.e., a so-called IC card, hereinafter referred to as "a memory card") is prepared for each application. The memory card is selectively inserted into the apparatus as required, and the stored application program is executed, whereby the application which is not the inherent application of the apparatus can be executed.

Naturally, kinds of keys vary depending on the application program to be executed. In view of this, some countermeasures are considered such as that keys corresponding to each of the application programs are previously provided, and that numerous item indications (key symbols) are provided for each key. However, these countermeasures cause problems such as that the number of keys becomes considerably large and that the size of each of the keys need be made small. Moreover, there arises another problem that a number of keys are not necessary for an application program currently executed.

In a small electronic apparatus, the area for the key arrangement is limited, so that the kinds of keys are limited. Therefore, the size of each key or the key symbols can not be changed. When the application program is changed in the above-mentioned manner, keys which are not previously provided, for example, special keys for the application program of a video game are sometimes required. In this case, the keys of fixed sizes and having fixed key symbols of the apparatus are used for the special keys. Accordingly, the operability of such a conventional electronic apparatus is poor.

Some improved configurations are suggested against the above-mentioned problems, as follows:
(1) Keys suitable for the stored application program are provided on a memory card (for example, Japanese Laid-Open Patent Publication No. 59-68072).
(2) The body of the apparatus is provided with transparent key section and an inserting section for a memory card at the lower side of the key section, and key symbols suitable for the stored application program are marked on the surface of the memory card (for example, Japanese Laid-Open Patent Publication No. 59-123986).
(3) Transparent keys are provided to cover a display screen, and key symbols necessary for the loaded application program are displayed on the display screen under the light transmitting keys.

The configuration in which keys or key symbols are provided on the card is not suitably used for the application program which necessitates a lot of kinds of keys, since the keys or key symbols are fixedly provided.

The other configuration in which key symbols are displayed on the display screen is advantageous in that the key symbols can be changed depending on the application program. However, if the size of the key which is used at a high rate (for example, a movement key such as a cursor key) is to be made larger, the area for displaying other information becomes smaller.

This causes a problem that the amount of information displayed at a time is decreased.

Prior art document US-A-4 885 574 discloses a display and keyboard panel for an electronic device such as a handheld or desktop calculator, the panel having a keyboard area and an indication area located in the vicinity of the keyboard area. The indication area has a plurality of key sections each having at least two component areas each for indicating a single piece of information. Each of the key sections is typically formed by a touch sensor switch area having at least two adjacent areas corresponding respectively to the aforesaid component areas, each of the adjacent areas of the touch sensor switch area including at least one segment or plural segments of a conductor.

Further, prior art document EP-A-0 373 961 describes a portable computer which has incorporated therein a central processing unit, a display apparatus and a timer circuit. The computer is also provided with exclusive operation keys whereby image data corresponding to a predetermined condition can be displayed on the display apparatus merely by depressing the predetermined exclusive operation key, and schedule data judged from the data of the present time can also be displayed on the display apparatus merely by depressing the predetermined exclusive operation key.

Prior art document PATENT ABSTRACTS OF JAPAN vol. 12, no. 401 (P-776) 25 October 1988 & JP-A-63 142 410 (SHARP CORP), 14 June 1988, discloses an electronic equipment which consists of a body device and an application card to attain plural functions, for example, functions of calendar, schedule, telephone, memorandum, calculation, etc. The body device is provided with a display part, a key part for data input, and a transparent touch key and includes a central processing unit which controls each input/output part. Selecting keys of these functions and further keys corresponding to respective functions are divided into blocks and are accordingly arranged. Thus, key operations are smoothly performed because it is sufficient therefor if a key in a prescribed block is depressed.

Further, prior art document PATENT ABSTRACTS OF JAPAN vol. 10, no. 119 (P-453) 6 May 1986 & JP-A-60 246 469 (SONY KK), 6 December 1985 describes a portable type electronic apparatus using a memory card. In this apparatus, when the memory card is inserted into a connector, a program stored in the card is loaded, an initial picture for showing an operation menu is displayed on a display part, and a menu is selected by a cursor key and an execution key of a keyboard. A switch panel is operated by viewing the switch pattern of the card, and also an input can be executed from a further keyboard, too. An input by the touch panel can be changed by the memory card.

Finally, prior art document PATENT ABSTRACTS OF JAPAN vol. 13, no. 172 (P-862) 24 April 1989 & JP-A-10 07 158 (SHARP CORP), 11 January 1989, describes an electronic device, wherein data inputted from an information input key and a transparent touch key are processed by a CPU. The operation control program of the CPU is stored in an incorporated ROM. Control programs of input/output parts are mainly stored and are used as subroutines in the program of an application card. When the card is set to an electronic device body and the information input key is operated to set the mode where the card function is used, the display picture is switched to the processing picture of application software. A symbol of the card operation state is displayed on a display device for the purpose of indicating the mode of the card.

### SUMMARY OF THE INVENTION

It is an object of the present invention to provide a small electronic apparatus, wherein key symbols can be used without reducing the display area for displaying other information.

To solve this object the present invention provides a small electronic apparatus as specified in claim 1. Preferred embodiments of the invention are described in the subclaims.

The small electronic apparatus of this invention, which overcomes the above-discussed and numerous other disadvantages and deficiencies of the prior art, comprises especially: a display section having key entry means; card-like storage means for storing at least an application program; a card holding section for detachably holding said card-like storage means; and a key entry section which is substantially transparent and provided on the upper surface of said card holding section, at least part of the upper surface of said card-like storage means being observable through said key entry section, said card-like storage means comprising at least one key symbol formed on said upper surface of said card-like storage means, said apparatus further comprising key symbol display means for selectively displaying other key symbols in the vicinity of said key entry means, in accordance with the application program stored in said card-like storage means held in said card holding section.

In a preferred embodiment, said card-like storage means is an IC card.

In a preferred embodiment, said key symbol formed on said upper surface of said card-like storage means is greater in size than said other key symbols.

In a preferred embodiment, the contents of said other key symbols are changeable in accordance with the application program to be executed.

The number of said other key symbols is changeable in accordance with the application program to be executed.

A small electronic apparatus having a pocket book-like shape, in which one of operation modes is selectively executed, comprises: a body having a rectangular plate-like shape; a lid for covering said body; said lid being swingably attached to said body; a plurality of mode selection keys, arranged in a line in the periphery of said lid, for selecting one of said operation modes. The selection keys are placed on the inner surface of said lid, said inner surface opposing said body when said lid is closed. The mode selection keys are membrane switches, and the lid is detachably attached to the back of said body.

The present invention enables a small electronic apparatus which can be provided with keys the kinds of which depend on the application program to be executed, wherein keys can be selectively formed dependent on an application program to be executed, the size of a key which is used at a high rate can be made larger, and in which a mode selection can be readily performed.

### BRIEF DESCRIPTION OF THE DRAWINGS

This invention may be better understood and its numerous objects and advantages will become apparent to those skilled in the art by reference to the accompanying drawings as follows:

Figure 1 is a perspective view of an embodiment of the invention.

Figure 2 schematically shows the internal configuration of a memory card used in the embodiment of Figure 1.

Figure 3 is a plan view of the memory card shown in Figure 2.

Figure 4 is a block diagram illustrating the hardware configuration of the embodiment of Figure 1.

Figure 5 shows a memory map of the embodiment of Figure 1.

Figure 6 is a diagram illustrating a mode selection section in the embodiment of Figure 1.

Figure 7 is a flowchart illustrating the power on operation of the embodiment of Figure 1.

Figures 8 and 9 are flowcharts illustrating the processing of a calendar function.

Figures 10 and 11 are flowcharts illustrating the processing of a telephone book function.

Figures 12 to 14 are flowcharts illustrating the processing of a schedule function.

Figures 15 to 17 are flowcharts illustrating the processing of a memorandum function.

Figures 18 and 19 are flowcharts illustrating the processing of a handwriting memorandum function.

Figure 20 shows examples of the display appearing when the application program of a Kanji dictionary is executed.

### DESCRIPTION OF THE PREFERRED EMBODIMENTS

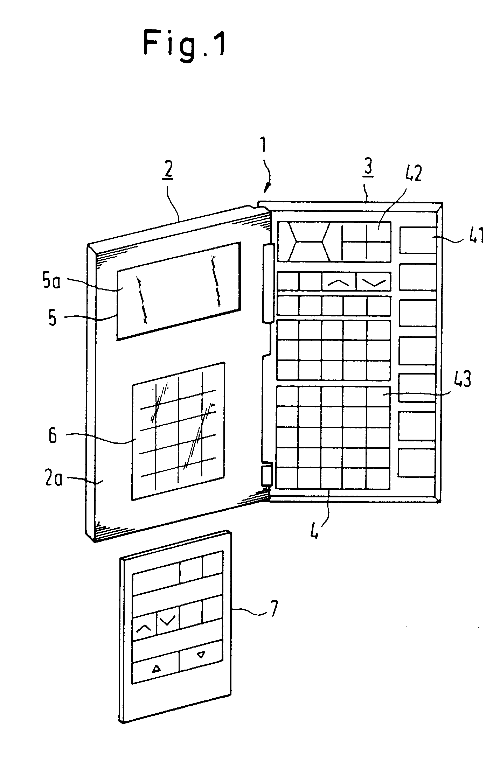

Figure 1 shows an external view of one embodiment according to the invention. The embodiment is a so-called electronic organizer **1**. The electronic organizer **1** comprises a body **2** and a lid **3**. The body **2** and the lid **3** are hinged at the back side so as to open and close at will. The body **2** can be separated from the lid **3**.

On the front of the body **2**, there are provided a liquid crystal display (LCD) **5** capable of displaying multiple lines, and a transparent keyboard **6**. A display device of another type having a low power consumption may be used instead of the LCD **5**. A transparent coordinate entry section **5a** is provided so as to cover the LCD **5**. The transparent coordinate entry section **5a** is constructed in such a manner that two transparent sheets are located opposite to each other with sandwiching a spacer formed by printing. On the approximately entire one face of each of the transparent sheets, a transparent conductive film is formed. Thus, the displayed contents on the LCD **5** can be seen through the transparent coordinate entry section **5a.**

An inserting section **2a** is provided in the lower portion of the body **2** for inserting a memory card **7**. When the memory card **7** is inserted in position through a slot (not shown) provided in the bottom of the body **2**, the operator can see the front face of the memory card **7**. The front face of the inserting section **2a** constitutes a transparent keyboard **6** having 4 x 5 key inputs. As described later, the transparent keyboard **6** is used when executing the application program contained in the memory card **7**.

The lid **3** comprises a keyboard **4**. The keyboard 4 comprises a mode selection section **41**, an operation instructing section **42,** and a data entry section **43**. The mode selection section **41** includes keys for selecting the modes. The operation instructing section **42** includes a power key, a plurality of function keys used to perform various operations (e.g., an "insert" key, a "selection" key and a "recall" key), and cursor movement keys. The data entry section **43** includes character keys for inputting character data, and numeric keys for inputting numeric data.

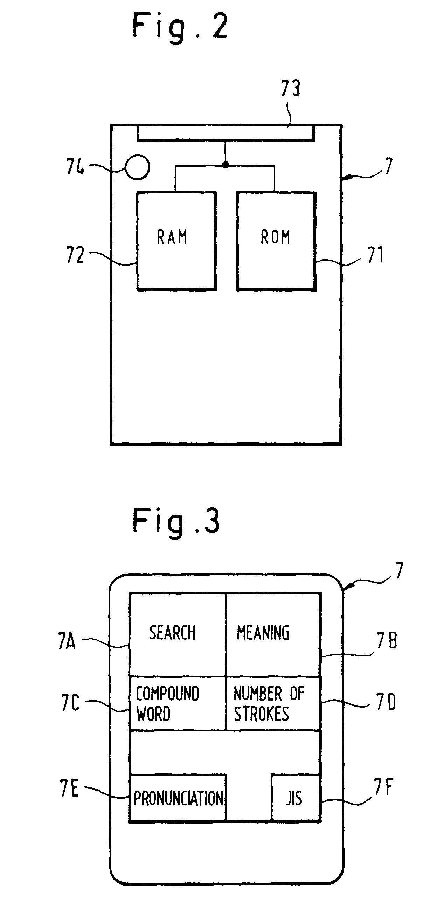

Figure 2 schematically shows the internal configuration of the memory card **7**. As shown in Figure 2, the memory card **7** comprises a ROM **71** storing an application program, a RAM **72** for storing variable information generated during the execution of the application program, a female connector **73** for connecting the ROM **71** and RAM **72** to the inserting section **2a**, and a backup battery **74** for retaining information stored in the RAM **72**. When the application program stored in the ROM **71** is the type that does not generate variable information during the execution thereof, either the RAM **72** or the battery **74** need not be provided.

On the front face of the memory card **7,** key symbols **7A** to **7E** specific to the application program of the memory card **7** are printed as exemplarily shown in Figure 3. The key symbols **7A** to **7E** themselves do not function as keys, and actual key entries are made by using the transparent keyboard **6**. The key symbols will be described below in detail.

The memory card **7** contains an application program of a Kanji dictionary. In addition to the application program of a Kanji dictionary, the ROM **71** of the memory card **7** further contains a dictionary which stores a set of pronunciation (Japanese equivalent), Kanji-character font, number of strokes, meaning, Kanji compound word, JIS code, antonym, and synonym. In the application program of this type, since information which is required to be stored is not generated, the RAM **72** need not be provided.

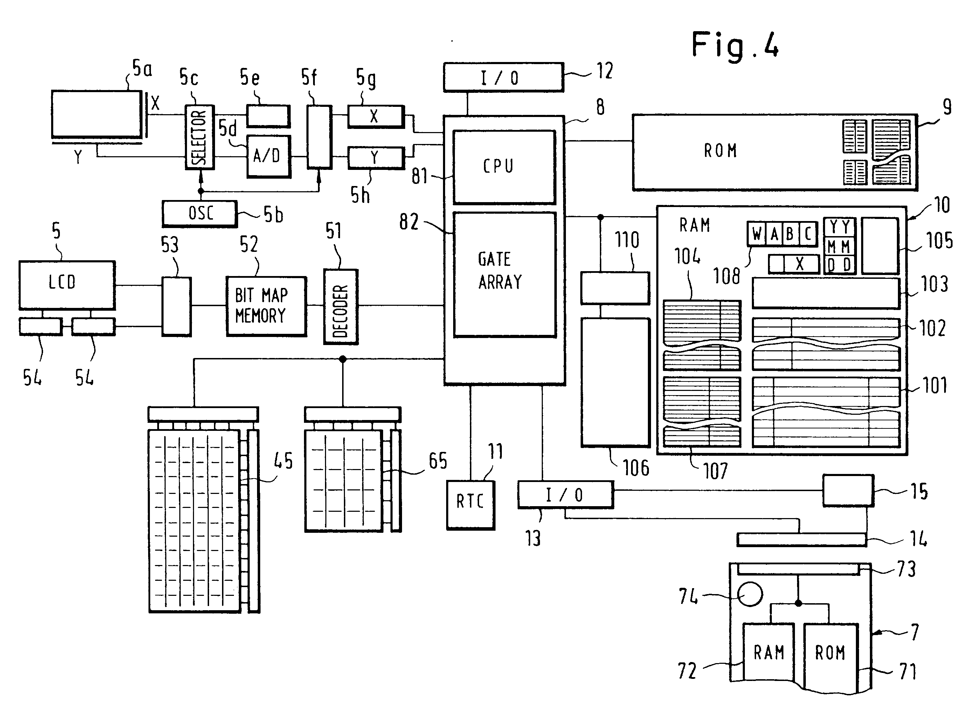

Figure 4 shows the hardware configuration of the electronic organizer **1**. A control section **8** for controlling the electronic organizer **1** comprises a CPU **81** and a gate array **82.**

The LCD **5** shown in Figure 1 is connected to the control section **8** via a decoder **51**, a bit map memory **52**, a common driver **53** and a segment driver **54**. The data to be displayed on the LCD **5** is supplied from the control section **8** to the decoder **51**. The data decoded by the decoder **51** is written into the bit map memory **52**. The bit map memory **52** is a memory in which one bit is assigned to each of pixels of the LCD **5** and the bits corresponding to white pixels are set to "1" and the other bits corresponding black pixels are set to "0". The common driver **53** and the segment driver **54** are used to display characters, graphics, etc. on the LCD **5** in accordance with the contents stored in the bit map memory **52**.

The reference numeral **45** designates a key matrix for detecting key entries from the keyboard **4**. The reference numeral **65** indicates a key matrix for detecting key entries from the transparent keyboard **6**.

A ROM **9** and a RAM **10** are also connected to the control section **8**. The ROM **9** stores a basic application program for performing basic functions such as data entry from the keyboard **4** and the transparent keyboard **6** and display on the LCD **5**; application programs for realizing a calendar display function, an address book function, a text preparing function, a schedule management function and a memorandum function; and a plurality of tables having fixed contents and used in the application programs such as the application program for calendar display. The RAM **10** is used for storing variable information which is required in the execution of an application program stored in the ROM **9**. The RAM **10** includes: an address book memory area **101** for storing person or company names, addresses, telephone numbers, etc.; a schedule memory area **102**; a memorandum data memory area **103**; a mode memory area **105** for storing various modes; a table **104** for storing the start address of memorandum information and the number of characters; a table **107** for storing the start address and the capacity of handwritten memorandum; and a memory area for data exchange **108** for exchanging data between the application programs. The RAM **10** further includes areas for various variables, pointers and flags. An image compression/expansion section **110** compresses and expands input image information in the same manner as that in transmitting and receiving operations of a facsimile apparatus. A sub-RAM **106** stores input image information.

Furthermore, a real time clock (RTC) **11**, an expansion terminal **12** for connecting an external device such as a printer, and an expansion terminal **13** exclusively used for connecting a memory card are connected to the control section **8**. Connected to the expansion terminal **13** are a male connector **14** which is plugged into the female connector **73** of the memory card **7** and a detecting section **15** for detecting the connection of the male connector **14** and the female connector **73** of the memory card **7**.

A selecting section **5c** is connected to the transparent coordinate entry section **5a**. The selecting section **5c** synchronizes with the oscillation of an oscillator **5b**, so as to alternately connect a constant voltage generating section **5e** and an A/D converter **5d** to the X- and the Y-terminals of the transparent coordinate entry section **5a**. When the transparent coordinate entry section **5a** is depressed, the voltage of the constant voltage generating section **5e** is divided in the transparent coordinate entry section **5a**, and converted into a digital signal by the A/D converter **5d**. The digital signal is alternately fed to an X register **5g** and a Y register **5h** via a switching section **5f** for switching the connection by synchronizing with the oscillation of the oscillator **5b** in a similar manner to that of the selecting section **5c**. Then, the depressed X and Y coordinates on the transparent coordinate entry section **5a** are stored in the X register **5g** and the Y register **5h**, respectively.

The input coordinate data stored in the X register **5g** and Y register **5h** are fed to the control section **8**. If the application program requires an image information entry, the input coordinate data is taken in the control section **8** as one dot pixel. If the application program is specific to a fixed information selection, it is determined to which defined key area the input coordinate data correspond, and the input coordinate data is taken into the control section **8**.

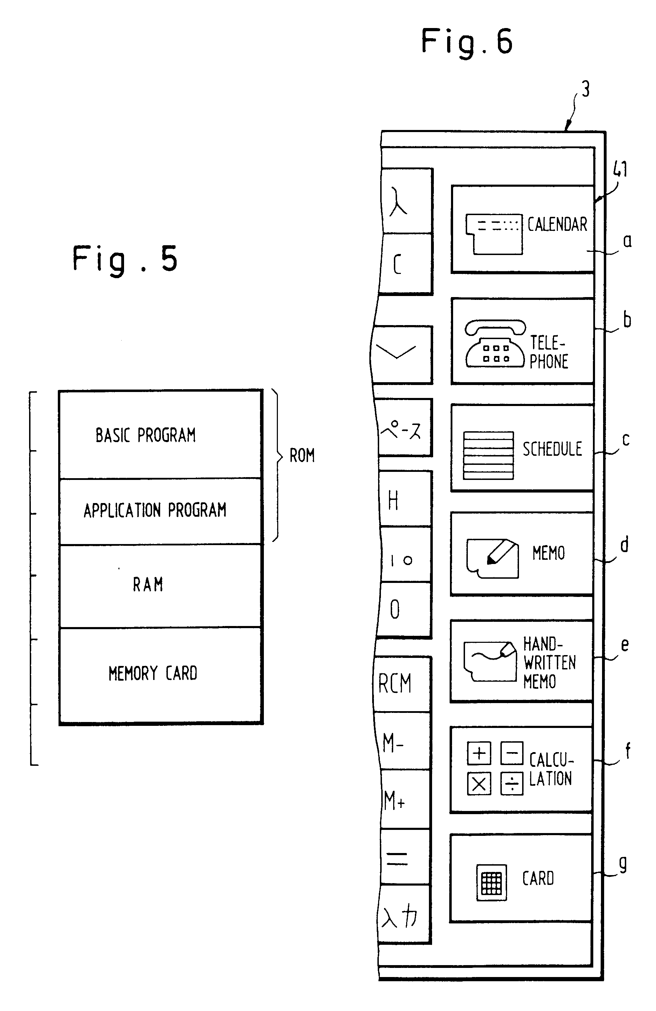

Figure 5 shows the memory map of the electronic organizer **1**. As shown in Figure 5, the addresses used in the electronic organizer **1** are assigned to the ROM **9,** the RAM **10** and the internal memory of the memory card **7**, in this order. Since the ROM **9** and the RAM **10** have fixed capacities, the addresses assigned to them are fixed. On the other hand, addresses starting from the address next to the last address of the RAM **10** of the electronic organizer **1** are assigned to the internal memory of the memory card **7** (the memory consists of the ROM **71** and RAM **72** or only of the ROM **71** depending on the case). The capacity of the internal memory of the memory card **7** may be vary from card to card. This means that the last address assigned to the internal memory of the memory card may vary from card to card. However, the upper limit of the last address is determined by the specification of the control section **8**.

Figure 6 shows the mode selection section **41** in more detail. In the mode selection section **41**, seven function keys **a** to **g** for respectively selecting a calendar function, a telephone book function, a schedule function, a memorandum function, a handwriting memorandum function, a calculation function, and a card function are vertically arranged in a line. These selection keys **a-g** are designed so as to be larger than the keys in other sections. The selection keys **a-g** are membrane switches.

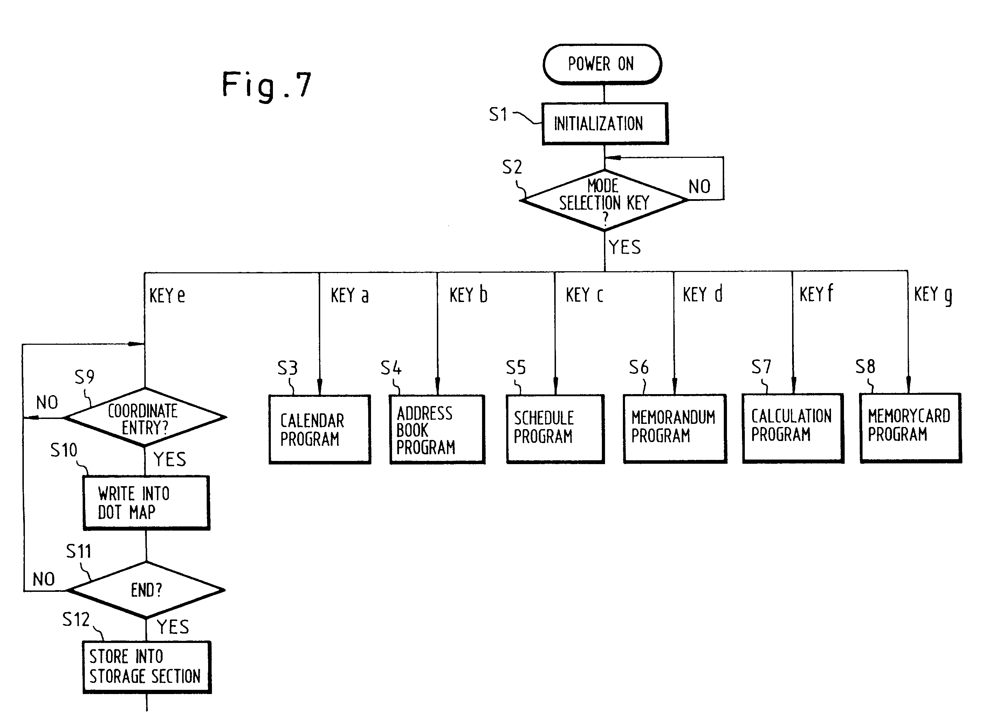

The flow of the processing when power is turned on is shown in Figure 7. First, the initialization is performed, and the depression of the selection keys **a-g** is waited. Alternatively, at this step, the program may be such that the mode at the last power-off operation is automatically selected, or that a specific mode is always selected.

When the selection key a for a calendar function is depressed, the control section **8** reads the present date from the RTC **11**, and reads information from the ROM **9**. The information contains what day of the week the first day of the month is and how many days the month has. From the information, the control section **8** calculates the calendar of one month including the aimed date, and the calendar is displayed on the LCD **5**. A number indicative of the aimed day blinks on the display.

When the selection key **b** for a telephone book function is depressed, an entry requirement of the name of a person whose telephone number the user wants to know is displayed on the LCD **5**. When the name is entered by operating the data entry section **43** and the cursor movement keys are appropriately operated, the name is searched from the address book memory area **101** of the RAM **10**, and the corresponding stored address and telephone number are displayed on the LCD **5**.

When the selection key **c** for a schedule function is depressed, the present date is read from the RTC **11**, and the closest future schedule is read out from the schedule memory area **102** of the RAM **10** and displayed on the LCD **5**.

When the selection key **d** for a memorandum function is depressed, the memorandum information which is lastly input into the memorandum data memory area **103** of the RAM **10** is displayed on the LCD **5**.

In the mode selected by the depression of one of the function selection keys **a-d**, initial or specific various kinds of information of the mode stored in the RAM **10** are displayed on the LCD **5**. The information to be displayed can be changed by indicating with the cursor movement keys. For example, when the schedule function is selected, the schedule next to the schedule now displayed can be displayed on the LCD **5** by operating the cursor movement keys.

When information is input by using the keys of the data entry section **43** after a mode has been selected, the input information can be stored in the RAM **10** for the corresponding mode.

When the selection key **e** for a handwriting memorandum function is depressed, input image information stored in the sub-RAM **106** is expanded to the original information by the image compression/expansion section **110**, and the original information is displayed on the LCD **5**. In displaying the handwritten memorandum information, if a coordinate entry with a pen, etc. with respect to the transparent coordinate entry section **5a** is detected, the handwritten memorandum information which is currently displayed is cleared, and a handwriting entry mode is started. In this handwriting entry mode, the locus of the positions input from the transparent coordinate entry section **5a** is displayed. The input coordinate information is compressed by the image compression/expansion section **110** and stored into the sub-RAM **106**. When the handwriting memorandum function is selected, the image information stored in the sub-RAM **106** are sequentially displayed by operating the cursor movement keys.

When the selection key **f** for a calculation function is depressed, the equation input to the LCD **5** is calculated in the control section **8**, and the result is displayed on the LCD **5**.

The selection key **g** for a card function is depressed, when the application program stored in the ROM **71** of the memory card **7** in the inserting section **2a** is to be executed instead of the application program stored in the ROM **9**. When the card function selection key **g** is depressed, the detecting section **15** electrically detects whether or not the female connector **73** of the memory card **7** is connected to the male connector **14**, whereby it is judged whether or not the memory card **7** is inserted in position. If judged that the memory card **7** is not inserted, the operation of the card function selection key **g** is nullified. If judged that the memory card **7** is in position, the application program stored in the ROM **71** of the memory card **7** is executed. The application program processing which has been executed is held by this mode selection and will be executed again by the next mode selection.

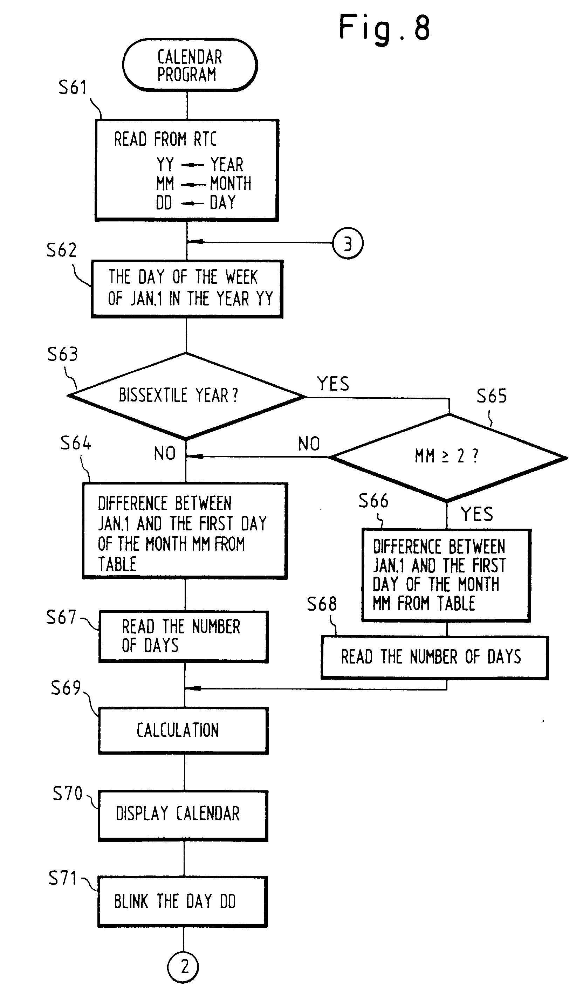

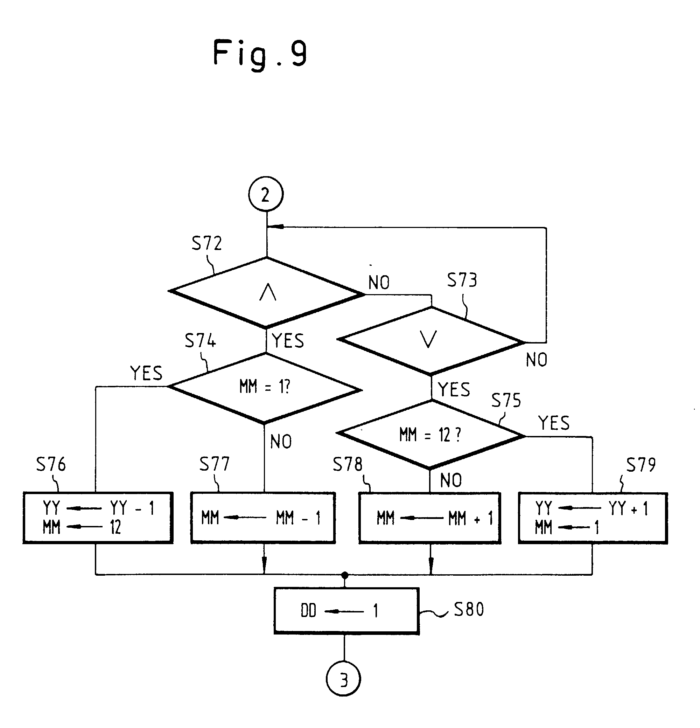

The processing of the calendar function will be described with reference to Figures 8 and 9.

When the calendar function is selected by depressing the selection key a, a calendar program first reads the present date (e.g., May 1, 1990) from the RTC **11**, and the year, month and day are substituted into variables YY, MM and DD (step S61). In step S62, a value indicating the day of the week of the first day of January in the year YY ("0" for Sunday, "1" for Monday, ···) is read out with reference to the table of the ROM **9** and substituted into a variable W (since the first day of January in 1990 is Monday, "1" is substituted into the variable W). In step S63, it is judged whether or not the year YY is a bissextile year. If YES, the process proceeds to step S65. If NO, the process proceeds to step S64. In step S65, it is judged whether or not the month MM is a month which need be subjected to special processing with respect to the bissextile year (MM ≧ 2). If the month MM is such a month, the process proceeds to step S66. If NO, the process proceeds to step S64. In step S64, a value for calculating the day of the week for the first day of the month MM for a year not related to the bissextile year is read out from the table in the ROM **9**. Regarding the first day of May, for example, this day is the 121st day from the first day of January. When 121 is divided by 7, the remainder is 2. Then, 1 is subtracted from the obtained remainder. The resulting value "1" is stored in this table. In step S66, a value for calculating the day of the week for the first day of the month MM related to a bissextile year is read out from the table in the ROM **9**. In steps S67 and S68, the number of days in the month MM is read out from the table in the ROM **9** (e.g., for May, "31" is read out). In step S69, the value for calculating the day of the week for the first day of the month MM is added to the value indicative of the day of the week for the first day of January in the year YY, thereby obtaining the day of the week for the first day of the month MM in the year YY (by the calculation (1 + 1 = 2), the first day of May in 1990 is Tuesday). At the end of the program, based on the thus obtained information, the calendar of the month MM in the year YY is displayed (step S70), and the day DD in the displayed calendar blinks (step S71).

In the calendar mode, after the above-mentioned calendar is displayed, a calendar of the previous month or the next month is displayed by the operation of the cursor movement keys, as described below with reference to the flowchart shown in Figure 9. In Steps S72 and S73, the program judges whether any of the cursor movement keys is depressed or not. If judged that the upper movement key is depressed, the process proceeds to step S74. If judged the lower movement key is depressed, the process proceeds to step S75. In step S74, it is judged whether the month now displayed is the first month of the year (January) or not. In step S75, it is judged whether the month now displayed is the last month of the year (December) or not. In accordance with the judged result, the process proceeds any one of steps S76-S79. In steps S76 to S79, appropriate values are substituted into the variables YY and/or MM. Into the variable DD, "1" is substituted (step S80), and the process returns to step S62 of Figure 8.

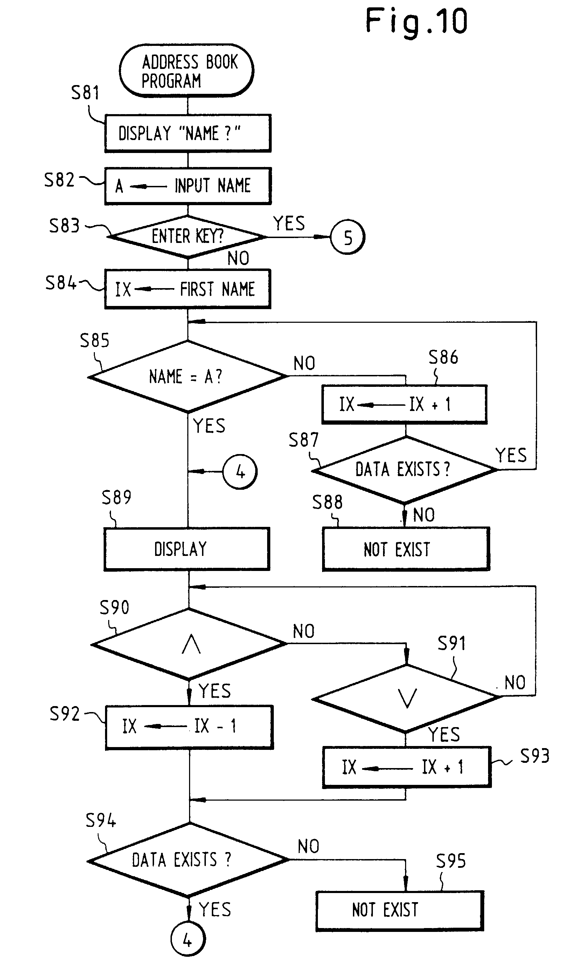

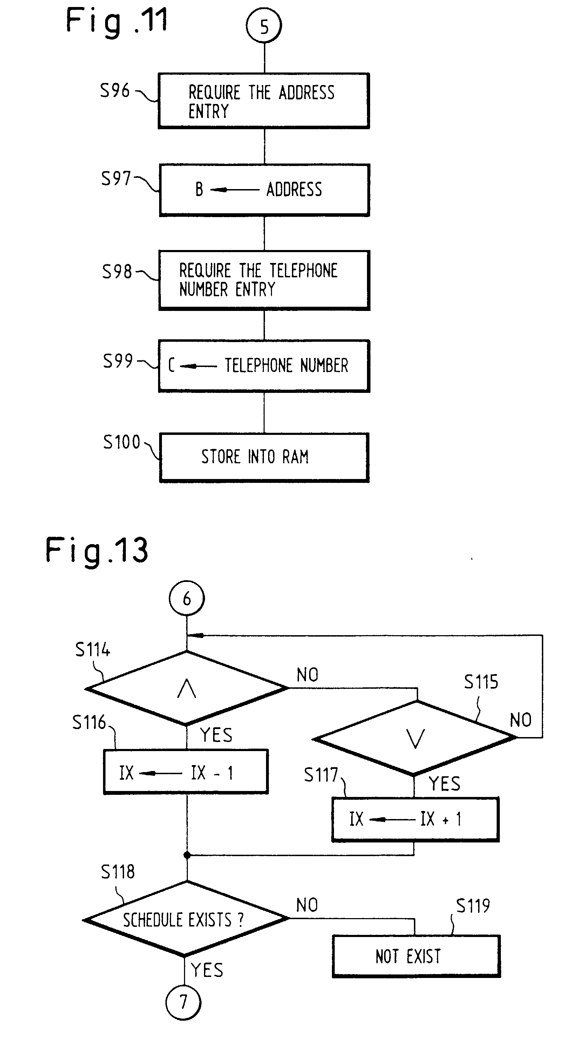

The processing of the telephone book function will be described with reference to Figures 10 and 11.

When the telephone book mode is selected by the depression of the selection key **b**, an address book program shown in Figure 10 is started. The LCD **5** displays "NAME?" to prompt the entry of the name which is in turn used as a key word for the search (step S81). In step S82, the input name is substituted into a variable A. In this step, the operator uses the cursor movement keys when the search is performed with the input name, and uses "enter" key when new address book data for the input name is to be registered. Whether the "enter" key is used or not is judged at step S83. If YES, the process proceeds to step S96 of Figure 11. If NO, the process proceeds to step S84. The address book memory area **101** of the RAM **10** stores address book data which is a set of the name, address and telephone number. In step S84, the address of the first address book data in the address book memory area **101** is set to an IX register. In step S85, it is judged whether or not the name in the address book data indicated by the IX register agrees with the name substituted into the variable A. If YES, the name, address and telephone number are displayed (step S89). If NO, one is added to the IX register, and the position of the next address book data is stored into the IX register (step S86). In step S87, it is judged whether or not the address book data exists at the address indicated by the IX register. If NO, the display indicates that the input name is not stored (step S88). If YES, the agreement of the names is judged again at step S85.

After the address book data is displayed at step S89, the address book data preceding and succeeding the data currently displayed are displayed when the cursor movement keys are operated. In Figure 10, it is judged at steps S90 and S91 whether or not any of the cursor movement keys is depressed. If it is judged that the upper movement key is depressed, the process advances to step S92. If it is judged that the lower movement key is depressed, the process advances to step S93. In step S92, one is subtracted from the IX register, and the address of the previous address book data is stored in the IX register. On the contrary, in step S93, one is added to the IX register, and the address of the next address book data is stored in the IX register. In step S94, it is judged whether or not the address book data exists at the address indicated by the IX register. If YES, the process returns to the display step (step S89). If NO, the display indicates that the corresponding data does not exist (step S95).

In the case where the "enter" key is used for the entry of the name at step S82, the process advances to step S96 of Figure 11. In step S96, the entry of the address is required. The input address is substituted into a variable B (step S97). Next, at step S98, the entry of the telephone number is required. The input telephone number is substituted into a variable C (step S99). In step S100, data substituted into the variables A, B and C are stored next to the last address book data in the address book memory area **101** of the RAM **10**, whereby the register of the address book data for a person is completed.

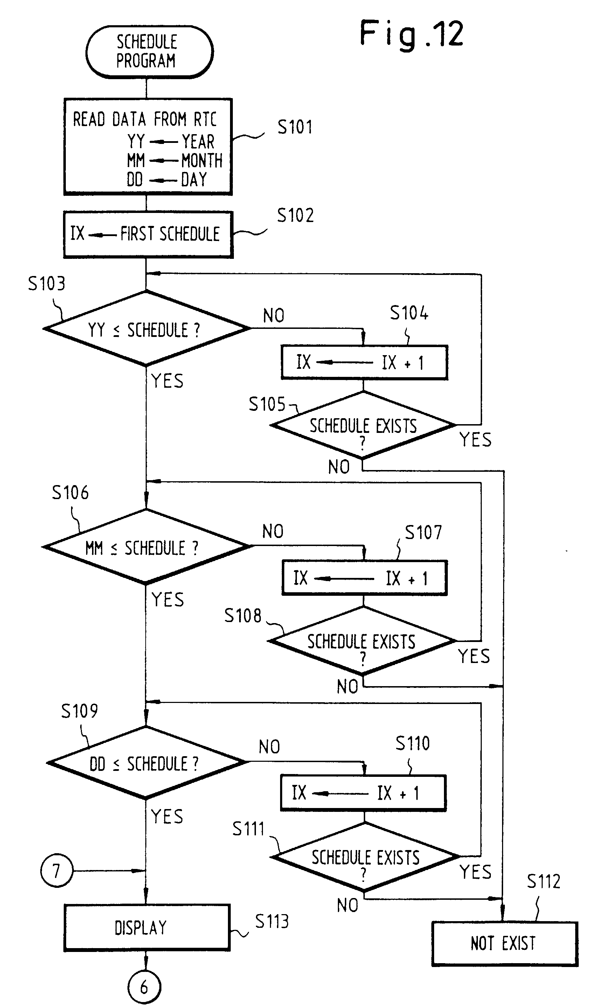

The processing of the schedule function will be described with reference to Figures 12 through 14.

When the schedule function is selected by the operation of the selection key **c**, the present date is read from the RTC **11**. The year, month and day are substituted into the variables YY, MM and DD, respectively (step S101). The schedules are stored in order of the date in the schedule memory area (schedule table) **102** of the RAM **10**. In step S102, the address of the schedule which is first stored in the schedule memory area **102** is set to the IX register. In step S103, it is judged whether or not the year of the schedule indicated by the IX register is YY or later. If this condition is satisfied, the process proceeds to step S106. If not satisfied, the process proceeds to step S104. In step S104, one is added to the IX register in order to store the address of the next schedule in the schedule memory area **102** into the IX register. In step S105, it is judged whether or not a schedule exists at the address indicated by the IX register. If YES, the process returns to step S103. If NO, the display indicates that the corresponding schedule does not exist. Through the processing of steps S103 to S105, among the schedules of the future including the present year, the schedule closest to the present is searched.

Steps S106 to S108 constitute a loop in a similar manner to steps S103 to S105 and deal with the month for the schedule.

Steps S109 to S111 constitute a loop in a similar manner to steps S103 to S105 and deal with the day for the schedule.

In step S113, the searched schedule (including the date and the schedule item) is displayed.

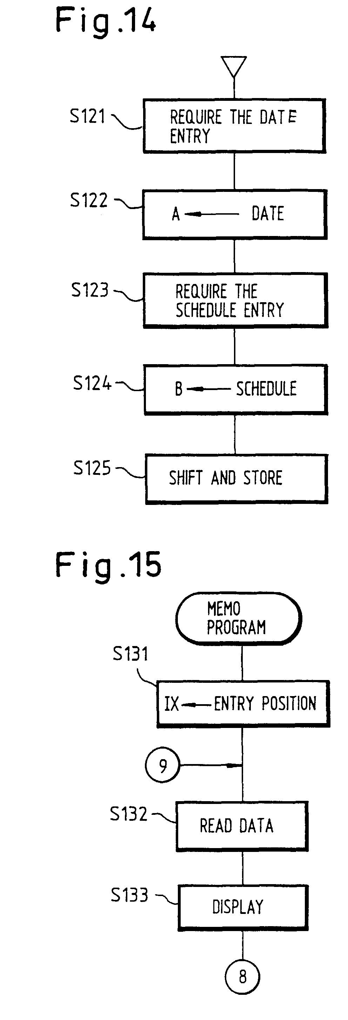

After the schedule is displayed at step S113, when the cursor movement keys are operated, a schedule which is stored before or after the schedule now displayed is displayed by the processing shown in Figure 13. In Figure 13, whether or not any of the cursor movement keys is depressed is judged at steps S114 and S115. If it is judged that the upper movement key is depressed, the process proceeds to step S116. If it is judged that the lower movement key is depressed, the process proceeds to step S117. In step S116, one is subtracted from the IX register, so as to store the stored address of the previous schedule into the IX register. On the contrary, in step S117, one is added to the IX register, so as to store the address of the next schedule into the IX register. In step S118, whether or not a schedule exists at the address indicated by the IX register is judged. If YES, the process advances to the display step (step S113). If NO, the display indicates that the corresponding schedule does not exist (step S119).

During the operation of the schedule program, when a clear key "C" is depressed, the process proceeds to step S121 of Figure 14 and enters a schedule entry mode. In step S121, the entry of the date of the schedule is required. The input date is substituted into a variable A (step S122). Next, in step S123, the entry of the schedule item is required. The input schedule item is substituted into a variable B (step S124). In step S125, the address of the input schedule to be stored into the schedule memory area **102** is determined, by comparing the date of the input schedule with the date of the schedule which has been stored in the schedule memory area **102**. In order to ensure the address in the area for storing the input schedule, schedules which locate after the address of the input schedule are shifted. The input schedule is stored in the thus ensured memory area.

The processing of the memorandum function will be described with reference to Figures 15 through 17.

As shown in Figure 15, the memorandum program sets the entry position which stores the address and the number of characters of the memorandum data which is stored lastly in the table **104**, to the IX register (step S131). The table **104** manages the start address in the memorandum data memory area **103** of the RAM **10** and the number of characters of the memorandum data stored in the memorandum data memory area **103**. Next, using the contents of the IX register and the contents of the table, the corresponding memorandum data is read out from the memorandum data memory area **103** (step S132), and displayed (step S133).

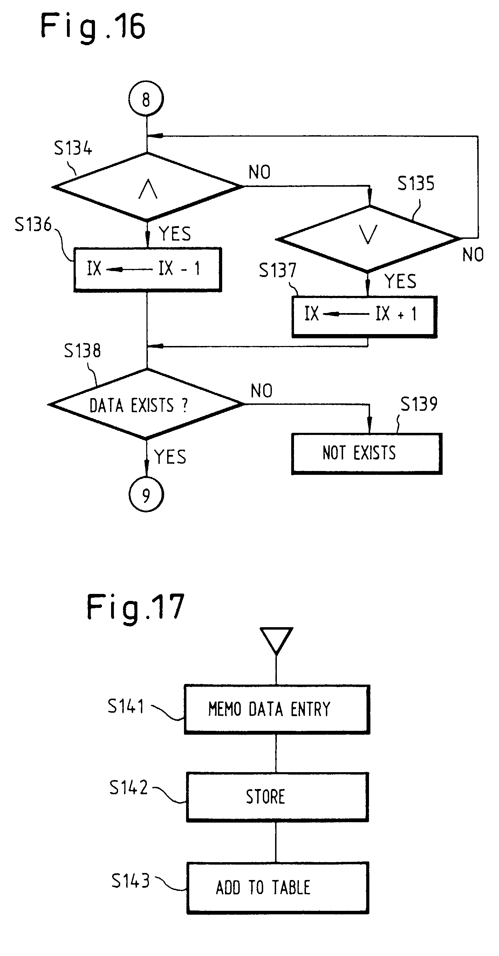

In step S133, after the memorandum data is displayed, when the cursor movement keys are operated, the memorandum data stored preceding or succeeding the memorandum data now displayed is displayed, by the processing shown in Figure 16. In Figure 16, whether any of the cursor movement keys is depressed or not is judged at steps S134 and S135. If it is judged that the upper movement key is depressed, the process proceeds to step S136. If it is judged that the lower movement key is depressed, the process proceeds to step S137. In step S136, one is subtracted from the IX register, so as to store the entry position of the table **104** for storing the start address and the number of characters of the previous memorandum data, into the IX register. On the contrary, in step S137, one is added to the IX register, so as to store the entry position of the table **104** for storing the start address and the number of characters of the next memorandum data, into the IX register. In step S138, it is judged whether or not data exists at the table entry indicated by the IX register, thereby judging whether memorandum data exists or not. If data exists at the table entry, the process returns to the memorandum data reading step (step S132). If data does not exist, the display indicates that the corresponding memorandum data does not exist (step S139).

During the operation of the memorandum program, when the character keys or numeric keys are operated, the program enters a memorandum data entry mode. In step S141, memorandum data is input, and then "enter" key is depressed. By this depression, the input memorandum data is added immediately after the memorandum data which is lastly stored in the memorandum data memory area **103** (step S142). In step S143, the entry position for storing the start address and the number of characters of the memorandum data stored at step S142 is added to the table **104**.

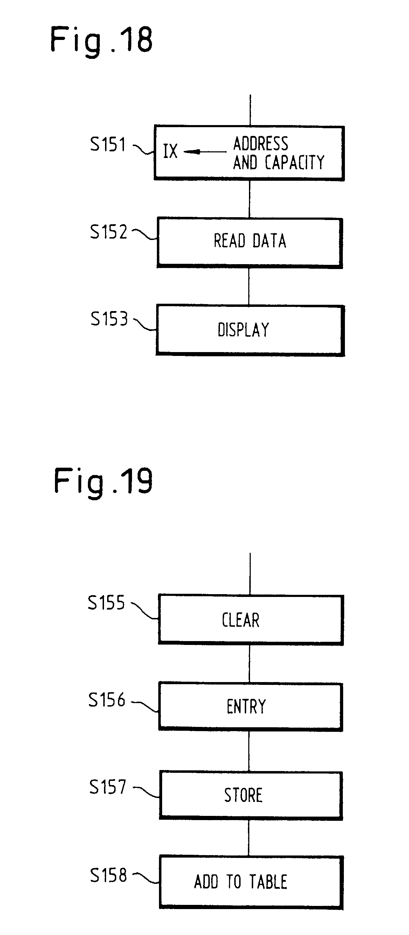

The processing, when the selection key e for a handwriting memorandum function is depressed, will be described with reference to Figures 18 and 19.

The start address of the information stored in the sub-RAM **106,** and the address and the capacity of the handwritten memorandum which is stored lastly in the table for managing the memory capacity are stored in the IX register (step S151). From the start address stored in the IX register, the information for the capacity stored in the IX register is read out from the sub-RAM **106**. The read-out information is expanded to the original form by the image compression/expansion section **110** (step S152) and then displayed on the LCD **5** (step S153). The displayed information is changed by the cursor movement keys using the same flow as in the memorandum function mode.

After the handwriting memorandum function mode is selected, when the transparent coordinate entry section **5a** is depressed, the information currently displayed on the LCD **5** is cleared (step S155). In step S156, information which is input by handwriting on the transparent coordinate entry section **5a** is written into a bit map for every input. The information is displayed on the LCD **5** for confirmation. By depressing the enter key after the completion of the memorandum information handwriting entry, the information written in the bit map is compressed by the image compression/expansion section **110.** The compressed information is stored after the handwritten memorandum information lastly stored in the sub-RAM **106** (step S157). The start address and the capacity after the compression of the handwritten information stored in the sub-RAM **106** are added to the table (step S158).

The card function mode will be described using the memory card **7** of Figure 3 which contains an application program of a Kanji dictionary, as an example.

On the memory card **7** of Figure 3, key symbols of keys which are used at a relatively high rate are printed as fixed key symbols. A "search" key symbol for instructing the search for a Kanji-character is indicated by **7A**. A "meaning" key symbol for instructing the display of the meaning of the searched Kanji-character is represented by **7B**. Since these two key symbols **7A** and **7B** are used at a greatly high rate, each of the key symbols **7A** and **7B** occupies the area corresponding to that of four keys in the transparent keyboard **6**. The reference numeral **7C** denotes a "compound word" key symbol for instructing the display of the Kanji compound words including the searched Kanji-character. The reference numeral **7D** designates a "number of strokes" key symbol for instructing the display of the number of strokes of the searched Kanji-character. The reference numeral **7E** denotes a "pronunciation" key symbol for instructing the display of the Japanese equivalents for the searched Kanji-character. Each of the key symbols **7C** to **7E** occupies the area corresponding to that of two keys in the transparent keyboard **6**. The reference numeral **7F** designates a "JIS" key symbol for instructing the display of the JIS code for the searched Kanji-character. The area of the "JIS" key is equal to that of a key in the transparent keyboard **6**.

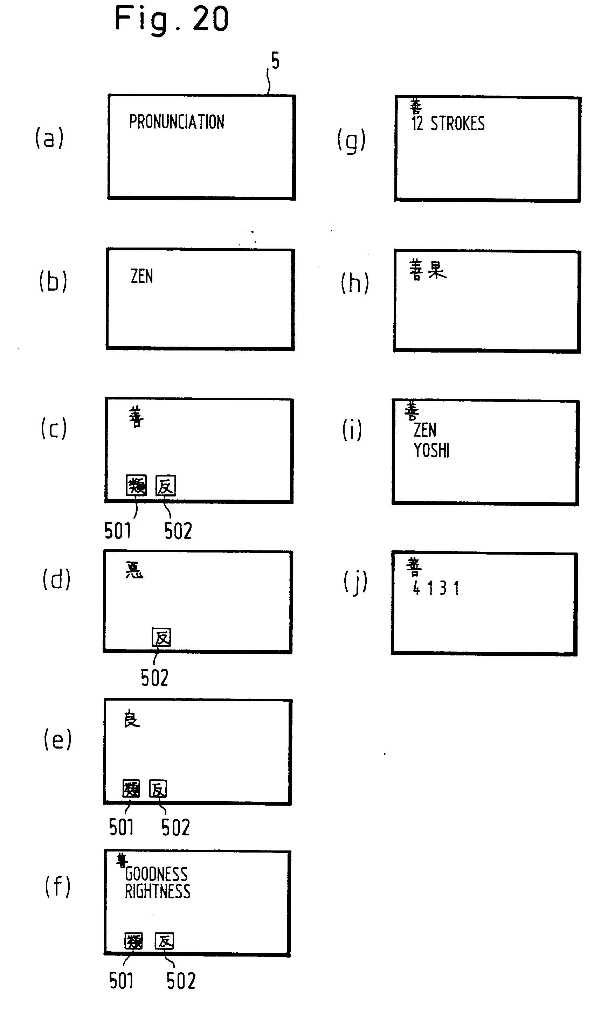

After the memory card **7** of the above-mentioned Kanji dictionary is inserted into the inserting section **2a**, the application program of a Kanji dictionary is executed by depressing the card function selection key **g**, and the entry of the Kanji-character to be searched is waited ((a) of Figure 20). The pronunciation is input using the data entry section **43** ((b) of Figure 20). When the portion of the "search" key symbol **7A** of the transparent keyboard **6** is depressed, the Kanji-characters having the input pronunciation are searched from the ROM **71** and stored in a register (not shown) of the control section **8**, and then displayed on the LCD **5** ((c) of Figure 20). In this step, if the displayed Kanji-character has a synonym and/or an antonym, icons **501** and **502** which respectively indicate the presence of a synonym and an antonym are displayed in the lower portion of the LCD **5**. If the Kanji-character does not have a synonym or an antonym, the corresponding icons **501** and **502** are not displayed. When the user wants to know the antonym, the user depresses the portion of the icon **502** on the transparent coordinate entry section **5a**. The control section **8** detects that the coordinate position for the icon **502** is depressed, in accordance with a signal from the transparent coordinate entry section **5a**, and the antonym is read out from the ROM **71** and displayed on the LCD **5** ((d) of Figure 20). Similarly, when the icon **501** for a synonym is depressed, the synonym is displayed ((e) of Figure 20). Thus, the icons **501** and **502** serves as key symbols.

The display screen in the case that the "meaning" key symbol **7B** is depressed is shown in (f) of Figure 20. The display screen when the "number of strokes" key symbol **7D** is depressed is shown in (g) of Figure 20. The display screen when the "compound word" key symbol **7C** is depressed is shown in (h) of Figure 20. The display screen when the "pronunciation" key symbol **7E** is depressed is shown in (i) of Figure 20. The display screen when the "JIS" key symbol **7F** is depressed is shown in (j) of Figure 20. The manner of the search operation is specifically described, for example, in Japanese Laid-Open Patent Publication No. 57-88478.

As described above, according to the embodiment, key symbols can be shown not only in the memory card **7** but also in the LCD **5** which functions as the display. Moreover, the key symbols of the keys which are used at a high rate are printed in a large size on the memory card **7**, and the key symbols of the keys which are used at a low rate are selectively displayed on the LCD **5.** Therefore, the amount of information to be displayed on the LCD **5** is not decreased by displaying the key symbols. Accordingly, keys the kinds of which depend on the application program to be executed can be selectively formed.

In the embodiment, the function selection keys **a-g** are vertically arranged in the right end portion of the electronic organizer **1** in the operation state. Therefore, when the electronic organizer **1** is held by the left hand, the function selection keys can be operated by a thumb of the right hand. Accordingly, the mode selection can be performed with a similar sense to the index used in a conventional memorandum book.

According to the invention, keys the kinds of which depend on the application program to be executed can be provided, and the keys can be selectively formed, thereby enhancing the operability of a small electronic apparatus. In the small electronic apparatus of the invention, the mode selection can be performed with a similar sense to the index used in the conventional memorandum book, whereby the apparatus can be remarkably readily operated.

It is understood that various other modifications will be apparent to and can be readily made by those skilled in the art without departing from the scope of this invention as defined by the claims.

## Claims

1. A small electronic apparatus comprising:
a display section (5);
a card-like storage means (7) for storing at least one application program;
a card holding section (2a) for detachably holding said card-like storage means (7);
a key entry section (6) which is substantially transparent and provided on the upper surface of said card-like storage means (7), said card-like storage means (7) being observable through said key entry section (6), wherein:
said card-like storage means (7) comprises at least one key symbol formed on said upper surface of said card-like storage means (7), said at least one key symbol being used at a high rate;
characterized in that
a key symbol display means selectively displays on said display section (5) a plurality of additional key symbols which are used at low rates, said display section (5) having a transparent coordinate entry section (5a), and said additional key symbols being changeable in accordance with the application program stored in said card-like storage means (7) held in said card holding section (2a).

2. An apparatus according to claim 1, wherein said card-like storage means (7) is an IC card.

3. An apparatus according to claim 1, wherein said key symbols formed on said upper surface of said card-like storage means (7) are greater in size than said at least one of the plurality of additional key symbols displayed on said display section (5).

4. An apparatus according to claim 1, wherein an indicia and a function of said additional key symbols are displayed on said display section (5) and are changeable in accordance with the application program to be executed.

## Patentansprüche

1. Kleines elektronisches Gerät, umfassend:
einen Anzeigeabschnitt (5),
eine kartenähnliche Speichereinrichtung (7) zum Speichern wenigstens eines Anwendungsprogrammes,
einen Kartenhalteabschnitt (2a) zum lösbaren Halten der kartenähnlichen Speichereinrichtung (7),
einen Tasteneingabeabschnitt (6), der im wesentlichen transparent und auf der Oberseite der kartenähnlichen Speichereinrichtung (7) vorgesehen ist, wobei die kartenähnliche Speichereinrichtung (7) durch den Tasteneingabeabschnitt (6) beobachtbar ist, wobei:
die kartenähnliche Speichereinrichtung (7) wenigstens ein Tastensymbol aufweist, das auf der Oberseite der kartenähnlichen Speichereinrichtung (7) gebildet ist, wobei das wenigstens eine Tastensymbol mit einer hohen Rate verwendet wird,
dadurch gekennzeichnet, daß
eine Tastensymbol-Anzeigeeinrichtung selektiv auf dem Anzeigeabschnitt (5) eine Vielzahl von zusätzlichen Tastensymbolen anzeigt, die mit niedrigen Raten verwendet werden, wobei der Anzeigeabschnitt (5) einen transparenten Koordinateneingabeabschnitt (5a) hat und die zusätzlichen Tastensymbole gemäß dem Anwendungsprogramm änderbar sind, das in der kartenähnlichen Speichereinrichtung (7) gespeichert ist, die in dem Kartenhalteabschnitt (2a) gehalten ist.

2. Gerät nach Anspruch 1, bei dem die kartenähnliche Speichereinrichtung (7) eine IC-Karte ist.

3. Gerät nach Anspruch 1, bei dem die Tastensymbole, die auf der Oberseite der kartenähnlichen Speichereinrichtung (7) gebildet sind, in der Abmessung größer als das wenigstens eine Tastensymbol der Vielzahl von zusätzlichen Tastensymbolen sind, die auf dem Anzeigeabschnitt (5) angezeigt sind.

4. Gerät nach Anspruch 1, bei dem eine Angabe und eine Funktion der zusätzlichen Tastensymbole auf dem Anzeigeabschnitt (5) angezeigt und gemäß dem auszuführenden Anwendungsprogramm änderbar sind.

## Revendications

1. Petit dispositif électronique comprenant :
une section d'affichage (5) ;
un moyen de stockage au format carte (7) destiné à stocker au moins un programme d'application ;
une section d'installation de carte (2a) destinée à recevoir de manière détachable ledit moyen de stockage au format carte (7) ;
une section de saisie à touches (6) pratiquement transparente et placée à la surface supérieure dudit moyen de stockage au format carte (7), ledit moyen de stockage au format carte (7) étant observable au travers de ladite section de saisie à touches (6), dans lequel :
ledit moyen de stockage au format carte (7) comprend au moins un symbole de touche formé sur ladite surface supérieure dudit moyen de stockage au format carte (7), ledit au moins un symbole de touche étant utilisé à un taux élevé ;
caractérisé en ce que
un moyen d'affichage de symbole de touche affiche de manière sélective sur ladite section d'affichage (5) une pluralité de symboles de touches additionnels qui sont utilisés à des taux faibles, ladite section d'affichage (5) ayant une section de saisie de coordonnées transparente (5a) et lesdits symboles de touche additionnels étant modifiables en fonction du programme d'application stocké dans ledit moyen de stockage au format carte (7) installé dans ladite section d'installation de carte (2a).

2. Dispositif selon la revendication 1, dans lequel ledit moyen de stockage au format carte (7) est une carte à circuit intégré.

3. Dispositif selon la revendication 1, dans lequel lesdits symboles de touche formés sur ladite surface supérieure dudit moyen de stockage au format carte (7) sont plus grands en dimensions que ledit au moins un symbole de la pluralité de symboles additionnels affichés sur ladite section d'affichage (5).

4. Dispositif selon la revendication 1, dans lequel une marque distinctive et une fonction desdits symboles de touche additionnels sont affichées sur ladite section d'affichage (5) et sont modifiables en fonction du programme d'application à exécuter.
